# EUROPEAN PATENT APPLICATION

(11) **EP 3 621 309 A1**
(43) Date of publication of application: **11.03.2020**
(21) Application number: 18823400.9
(22) Date of filing: 29.06.2018
(51) Int. Cl.: H04N 21/2385, H04N 21/218, H04N 5/247, H04N 5/77, H04N 5/917, H04N 9/87, H04N 21/2387

(54) **TRANSMISSION SYSTEM FOR MULTI-CHANNEL IMAGE, CONTROL METHOD THEREFOR, AND MULTI-CHANNEL IMAGE PLAYBACK METHOD AND APPARATUS**

(30) Priority: 29.06.2017 WO PCT/KR2017/006869; 12.12.2017 KR 20170170453
(71) Applicant: 4DReplay Korea, Inc., Seongnam-si, Gyeonggi-do 13535 (KR)
(72) Inventor: JUNG, Hongsu, Sunnyvale California 94089 (US); LEE, Sang Yun, Seoul 05635 (KR); KIM, Joon Ho, Gwangju-si Gyeonggi-do 12771 (KR); PARK, Sung Hwan, Bucheon-si, Gyeonggi-do 14753 (KR)
(74) Representative: Mewburn Ellis LLP
(86) International application number: PCT/KR2018/007414
(87) International publication number: WO 2019/004783

(57) **Abstract**

A transmission system for a multi-channel image includes: a camera control unit configured to control a plurality of cameras to photograph a subject for a predetermined time, and transmit multi-channel images corresponding to the plurality of cameras through a communication network; and an image server configured to group the multi-channel images transmitted from the camera control unit under at least one criterion among a time-based criterion, a channel-based criterion, and a mixed criterion of time and channel, store the same, and transmit the stored grouped image through the communication network in response to a request of a user terminal.

## Description

### TECHNICAL FIELD

The embodiments relate to a transmission system for a multi-channel image, a control method therefor, and a multi-channel image playback method and apparatus.

### BACKGROUND ART

Recently, the public prefer to play back videos using mobile devices. In line with this preference, companies provide broadcast platform services, e.g., V-app, AfreecaTV, and Youtube Live services. People watching through these platforms are watching images captured at one viewpoint, i.e., captured by one camera. However, recently, viewers want to watch images captured in a desired space.

At present, an imaging service of providing a multi-channel image to a user by geometrically correcting and multiplexing a plurality of images acquired by photographing one subject with various channels with a plurality of cameras is open to the public. Such a multi-channel image provides a realistic image beyond the concept of high definition, and therefore, users may be further immersed in media through realistic images, such that an image information delivery effect may be significantly enhanced in the fields of advertisement, education, medical service, national defense, entertainment, and the like.

A conventional multi-channel image is simply played back in a merge mode in which channel/time switching is previously determined when producing the multi-channel image. That is, according to the related art, one channel-switching image is produced by acquiring a plurality of frames from a plurality of cameras, selecting some of the acquired frames, and merging the selected frames. This channel-switching image is obtained by a producer by simply merging frames of previously determined channels when producing the image, and thus, when a corresponding image file is played back, a channel-switching effect in which the merged frames exhibit a single-channel shift effect is exhibited. According to such multi-channel images of the related art, a user merely watches a pre-produced simple channel switching effect, and it is impossible for a viewer to watch an image while tuning a channel to a viewpoint at which playback is desired by manually operating time switching or channel switching.

In addition, a multi-channel or camera synchronization scheme for image capturing in various spaces and an image correction and transmission method are needed.

### DESCRIPTION OF EMBODIMENTS

### TECHNICAL PROBLEM

The embodiments are to provide a transmission system for a multi-channel image, a control method therefor, and a multi-channel image playback method and apparatus therefor.

### SOLUTION TO PROBLEM

According to an embodiment, there is provided a transmission system for a multi-channel image, the transmission system including: a camera control unit configured to control a plurality of cameras to photograph a subject for a predetermined time, and transmit multi-channel images corresponding to the plurality of cameras through a communication network; and an image server configured to group the multi-channel images transmitted from the camera control unit under at least one criterion among a time-based criterion, a channel-based criterion, and a mixed criterion of time and channel, store the same, and transmit the stored grouped image through the communication network in response to a request of a user terminal.

According to another embodiment, there is provided a control method for a transmission system for a multi-channel image, the control method including: controlling a plurality of cameras to photograph a subject for a predetermined time; transmitting multi-channel images corresponding to the plurality of cameras through a communication network; grouping the multi-channel images transmitted from the camera control unit under at least one criterion among a time-based criterion, a channel-based criterion, and a mixed criterion of time and channel and storing the same; and transmitting the stored grouped image through the communication network in response to a request of a user terminal.

According to another embodiment, there is provided a playback apparatus for playback of a multi-channel image, the playback apparatus including: a memory storing the multi-channel image; and a processor configured to receive an event request from a predetermined channel among first to Mth channels corresponding to the multi-channel image, sequentially decode the multi-channel image from the first channel, render the decoded images in an occurrence direction of an event from the channel at which the event has occurred, and play back the rendered images.

According to another embodiment, there is provided a multi-channel image playback method, performed by a user terminal, for playback of a multi-channel image, the multi-channel image playback method including: receiving the multi-channel image from a server; playing back the multi-channel image at a preset specific viewpoint preset in the received multi-channel image; receiving, from a user, at least one event among a channel control event, a time control event, a channel and time control event, a zoom-in event, an object tracking event, fine speed tuning, and section repeat; and playing back the multi-channel image while shifting a channel or time of the multi-channel image according to the event.

According to another embodiment, there is provided a multi-channel image playback method, performed by a user terminal, for playback of a multi-channel image, the multi-channel image playback method including: transmitting a streaming request signal to a server; selectively receiving, from the server, one image among a plurality of single-channel images or a plurality of channel-switching images; and playing back the received single-channel image or channel-switching image when a playback request signal is received from the user terminal, wherein an image predetermined by the server is received among the single-channel images or the channel-switching images, or an image selected by the user terminal in the transmitting of the streaming request signal to the server is received.

### ADVANTAGEOUS EFFECTS OF DISCLOSURE

A transmission system for a multi-channel image according to an embodiment may increase convenience of data transmission of the multi-channel image and reduce a processing speed when shifting a space along a flow of time.

### BRIEF DESCRIPTION OF DRAWINGS

FIG. 1 is a schematic block diagram of a transmission system 100 for a multi-channel image, according to an embodiment.
FIG. 2 illustrates generation of a multi-channel image.
FIG. 3 is a flowchart of a control method for a transmission system for a multi-channel image, according to another embodiment.
FIG. 4 is a schematic block diagram of a camera control unit 110 shown in FIG. 1.
FIGS. 5A to 5D are schematic block diagrams of an image server 200 shown in FIG. 1.
FIGS. 6 to 9 illustrate grouping multi-channel images, according to another embodiment.
FIGS. 10 and 11 illustrate methods of decoding and rendering in response to occurrence of an event, according to another embodiment.
FIG. 12 is a diagram of signaling between the image server 200 and a user terminal 150, for implementing real-time streaming, according to another embodiment.
FIG. 13 is a flowchart of a multi-channel image generation method according to another embodiment.
FIG. 14 is a conceptual diagram of arranging respective images received from a plurality of cameras on a frame basis.
FIG. 15 is a conceptual diagram of a plurality of single-channel images generated by encoding a plurality of images.
FIG. 16 is a conceptual diagram of a multi-channel image generated by multiplexing a plurality of single-channel images.
FIG. 17 is a flowchart of a multi-channel image playback method according to another embodiment.
FIG. 18 is a flowchart of a multi-channel image generation method according to another embodiment.
FIG. 19 is a conceptual diagram of a plurality of single-channel images generated by encoding a plurality of images.
FIG. 20 is a conceptual diagram of channel-switching images.
FIG. 21 is a flowchart of a multi-channel image playback method according to another embodiment.
FIG. 22 is a conceptual diagram of a playback scenario of a multi-channel image, according to another embodiment.
FIG. 23 is a conceptual diagram of another playback scenario of a multi-channel image, according to another embodiment.

### MODE OF DISCLOSURE

The terms used in embodiments are those general terms currently widely used in the art, but the terms may vary according to the intention of those of ordinary skill in the art, precedents, or new technology in the art. Also, specified terms may be arbitrary selected, and in this case, the detailed meaning thereof will be described in the detailed description of corresponding embodiments. Thus, the terms used in the present embodiments should be defined not by simple names but based on the meaning of the terms and the overall description of the embodiments.

In the description of the embodiments, when it is described that a certain part is connected to another part, the certain part may be connected to another part directly or electrically with a third component interposed therebetween. In addition, when a certain part includes a component, unless there is another opposite description thereto, it should be understood that the component does not exclude another element but may further include another element. In addition, terms such as "... unit" refer to units that perform at least one function or operation, and the units may be implemented as hardware or software or as a combination of hardware and software.

It should not be analyzed that the term such as "consist of" or "include" used in the present embodiments necessarily includes all of a plurality of components or a plurality of steps described in the specification, and it should be analyzed that some components or steps thereof may not be included, or additional components or steps may be further included.

It should not be analyzed that the description of the embodiments below delimits the right scope, and it should be analyzed that the matters which could be readily inferred by those of ordinary skill in the art belong to the right scope of the embodiments. Hereinafter, the embodiments for only illustration will be described in detail with reference to the accompanying drawings.

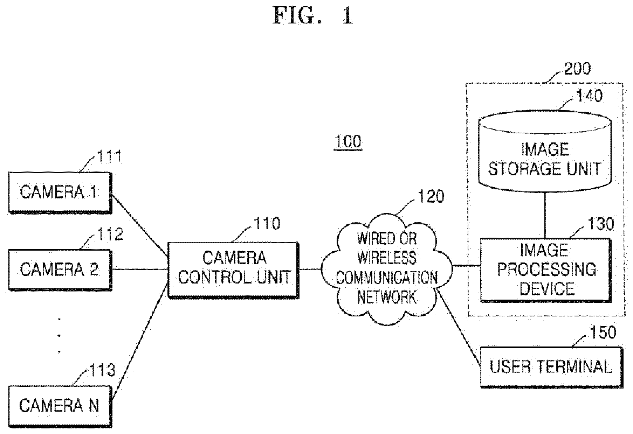

FIG. 1 is a schematic block diagram of a transmission system 100 for a multi-channel image, according to an embodiment.

Referring to FIG. 1, the transmission system 100 includes a plurality of cameras 111 to 113, a camera control unit 110 configured to control the plurality of cameras 111 to 113 and process and transmit multi-channel images captured by the plurality of cameras 111 to 113, and an image server 200 configured to process and store the multi-channel images transmitted from the camera control unit 110. The image server 200 receives a request for a multi-channel image, a request for a switching image, and a request for a specific event from a user terminal 150 and transmits a stored multi-channel image to the user terminal 150. Herein, the user terminal 150 may include a TV, a cellular phone, a smartphone, a laptop computer, a tablet personal computer (PC), an e-book terminal, a digital broadcast terminal, a person digital assistant (PDA), a portable multimedia player (PMP), a navigation machine, an MP3 player, a digital camera, or the like but is not limited thereto.

The image server 200 may include an image processing device 130 and an image storage unit 140.

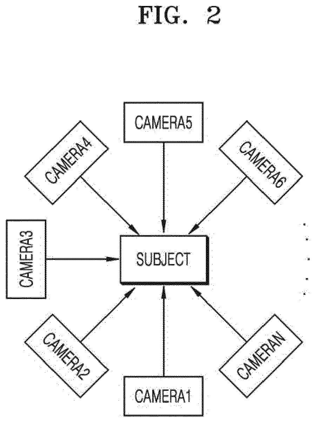

As shown in FIG. 2, a plurality of cameras, e.g., camera 1 to camera N, may be arranged to capture a specific subject. A plurality of image obtained by capturing the subject at multiple angles are received from the plurality of cameras arranged in an array around the subject. A method of arranging the plurality of cameras may include, for example, arranging the N cameras in a line on substantially the same plane with reference to an arbitrary camera. In this case, the N cameras may be sequentially arranged on a circumference separated by a predetermined distance from the subject, or distances between two cameras arranged at both sides of a camera arranged at the center and the subject may be same and distances between the remaining cameras and the subject may be different. In addition, the subject may be a stationary subject or a moving subject.

The plurality of cameras, e.g., camera 1 to camera N, may communicate with the camera control unit 110 in a wired or wireless manner, and a plurality of camera control units for controlling the plurality of cameras, e.g., camera 1 to camera N, may be provided.

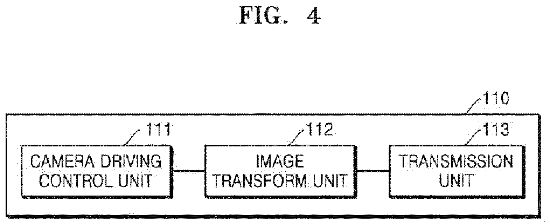

The camera control unit 110 may control the plurality of cameras, e.g., camera 1 to camera N, through a synchronization signal for synchronizing the plurality of cameras, e.g., camera 1 to camera N. The camera control unit 110 temporarily stores images captured by the plurality of cameras, e.g., camera 1 to camera N, reduces a size of a captured image through a codec change, and enables quick transmission. A detailed configuration of the camera control unit 110 is described with reference to FIG. 4.

The camera control unit 110 may include a camera driving control unit 111, an image transform unit 112, and a transmission unit 113.

The camera driving control unit 111 controls camera synchronization and photographing.

The image transform unit 112 reduces sizes of images through a codec change such that quick transmission of images generated by the plurality of cameras, e.g., camera 1 to camera N, through a communication network 120 is easy. In addition, the image transform unit 112 may determine a data transmission scheme suitable for a photographing site or for wireless transmission.

The transmission unit 113 transmits transformed images to the image server 200 through the communication network 120.

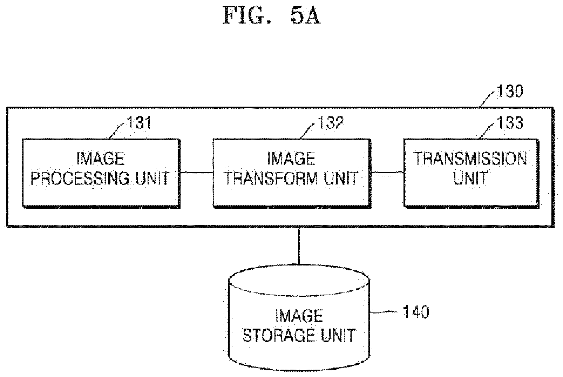

The image server 200 groups multi-channel images transmitted from the camera control unit 110 under at least one criterion among a time-based criterion, a channel-based criterion, and a mixed criterion of time and channel and stores the same, and transmits the stored grouped image through the communication network 120 in response to a request of the user terminal 150. A detailed configuration of the image server 200 is described with reference to FIGS. 5A to 5D.

Referring to FIG. 5A, the image server 200 includes the image processing device 110 and the image storage unit 140. The image processing device 110 includes an image processing unit 131, an image transform unit 132, and a transmission unit 133.

The image processing unit 131 performs image correction on multi-channel images, i.e., images captured by the plurality of cameras, transmitted from the camera control unit 110. For example, since focal points of the images captured by the plurality of cameras may not match, image processing is performed such that focal points of the cameras are same. The image processing unit 131 corrects received multi-channel images. Geometric errors of an arrangement of N cameras cause visual shaking in a process of playing back a multi-channel image, and thus, to remove the errors, at least one of a size, a gradient, or a center position of each image may be corrected.

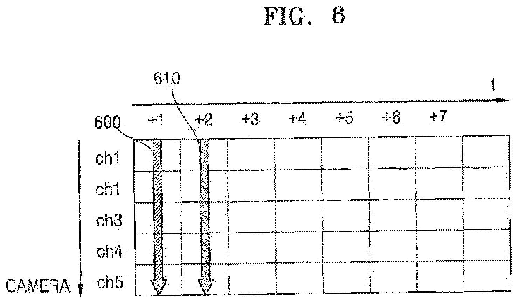

The image transform unit 132 groups multi-channel images under at least one criterion among a time-based criterion, a channel-based criterion, and a mixed criterion of time and channel. The image transform unit 132 groups several spaces to one grouped space. A grouping method may be performed according to various criteria and is described with reference to FIGS. 6 to 9. According to an embodiment, the transmission system 100 may transmit only data necessary to a user by transmitting grouped images without data waste through transmission of all image data to transmit an effective multi-channel image or switching image to the user terminal 150. The image transform unit 132 may group images of a channel for ±y (y is a natural number) times with reference to an event at time t. For example, an event may occur in channel 1 at time t3. Herein, the event may be previously determined, e.g., a homerun or out scene in a baseball game, an event according to a request of the user, or a case desired by the user.

FIGS. 6 to 9 illustrate grouping multi-channel images, according to another embodiment.

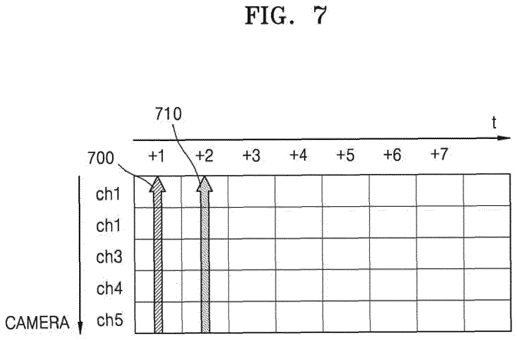

Referring to FIG. 6, a horizontal axis indicates time, a vertical axis indicates camera or channel, and image frames generated in respective channels at respective times are shown. FIG. 6 illustrates a method, as a basic grouping method, of grouping time-based channel images to one grouped image. As shown in FIG. 6, a grouped image 600 is generated by grouping images of channels 1 to 5, which are captured at t1. Likewise, a grouped image 610 is generated by grouping images of channels 1 to 5, which are captured at t2. Time-based grouping may be performed in this method, and for example, when cameras are arranged as shown in FIG. 2, the user terminal 150 may view images captured in all directions surrounding the subject at the same time. Although a method of grouping time-based channel images has been described with reference to FIG. 6, images may also be transmitted on a channel basis. In addition, although grouping may be performed in an order of cameras, i.e., in an order of a first channel to a fifth channel, as shown in FIG. 6, grouping may be performed in an opposite order i.e., in an order of the fifth channel to the first channel, as shown in FIG. 7.

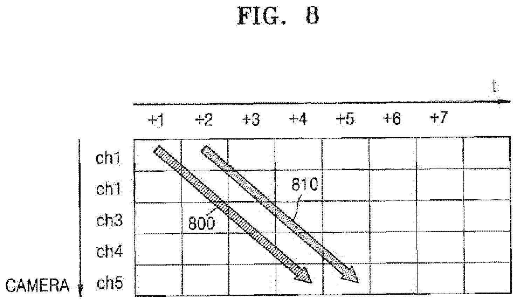

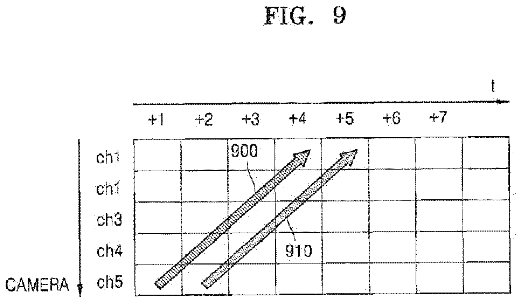

FIGS. 8 and 9 show a combination of time-based and channel-based grouping. As shown in FIG. 8, a grouped image 800 is generated by grouping a first channel image captured at t1, a second channel image captured at t2, a third channel image captured at t3, a fourth channel image captured at t4, and a fifth channel image captured at t5 in a descending order. Likewise, a grouped image 810 is generated by grouping a first channel image captured at t2, a second channel image captured at t3, a third channel image captured at t4, a fourth channel image captured at t5, and a fifth channel image captured at t6. Likewise, as shown in FIG. 9, a grouped image 900 may be generated by grouping a fifth channel image captured at t1, a fourth channel image captured at t2, a third channel image captured at t3, a second channel image captured at t4, and a first channel image captured at t5 in an ascending order.

Although grouping of time-based and channel-based mixed images has been described as shown in FIGS. 8 and 9, the present embodiment is not limited thereto, and grouping may be performed in various methods.

Referring back to FIG. 5A, grouped images transformed by the image transform unit 132 are stored in the image storage unit 140. When a request is received from the user terminal 150, the image processing device 130 extracts images stored in the image storage unit 140 and transmits the extracted images to the user terminal 150 through the transmission unit 133.

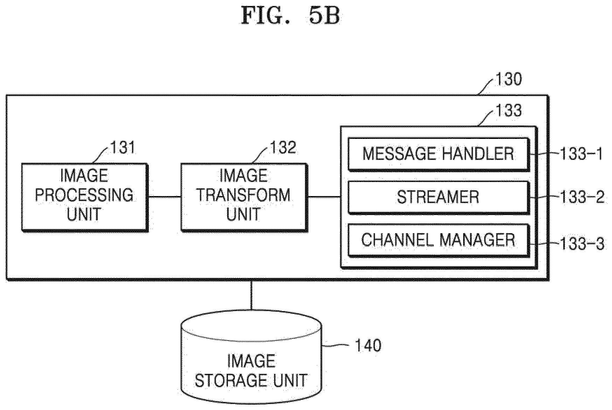

Referring to FIG. 5B, the image server 130 may include the image processing unit 131, the image transform unit 132, and the transmission unit 133, and the transmission unit 133 may further include a message handler 133-1, a streamer 133-2, and a channel manager 133-3. The transmission unit 133 may be a streaming device, and although it is described that the transmission unit 133 is included in the image server 130, the transmission unit 133 may be implemented as a separate device by being separated from the image server 130. The description made with reference to FIG. 5A is not repeated, and a difference therefrom is mainly described.

The transmission unit 133 transmits a processed or stored image in real-time. For example, the transmission unit 133 may be a device for real-time streaming.

The message handler 133-1 performs session management and protocol management with a user terminal.

The streamer 133-2 transmits an image to the user terminal and is a set of images to be transmitted to the user terminal.

The channel manager 133-3 receives a signal from the user terminal, schedules images in group of pictures (GOP) units, and then transmits scheduled images to the streamer 133-2.

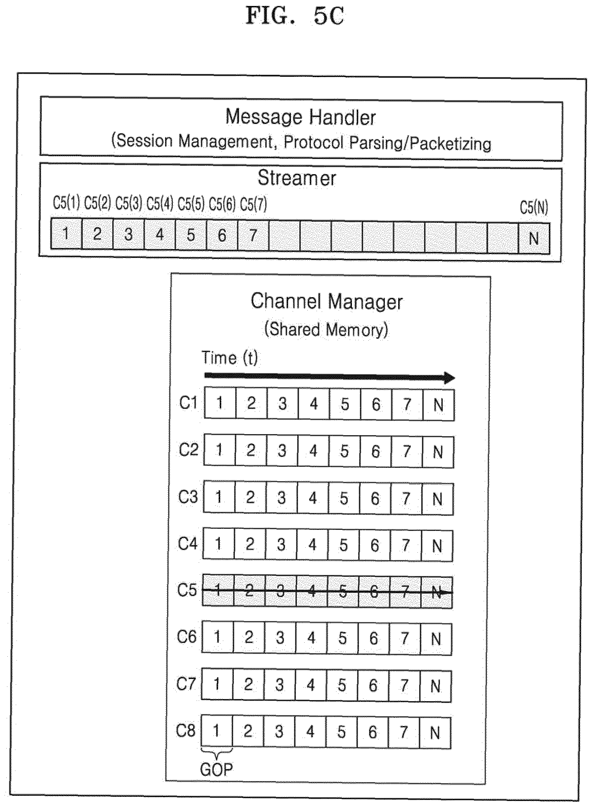

As shown in FIG. 5C, when there is no special request from the user terminal, e.g., when there is no channel change request or channel shift request, the channel manager 133-3 transmits images scheduled in each GOP unit to the streamer 133-2. As shown in FIG. 5C, images captured in channel 5, i.e., by camera 5, are scheduled in an order of GOP1 to GOPN and are transmitted to the streamer 133-2. The streamer 133-2 gathers GOP images according to scheduling of the channel manager 133-3 and transmits the gathered GOP images to the user terminal.

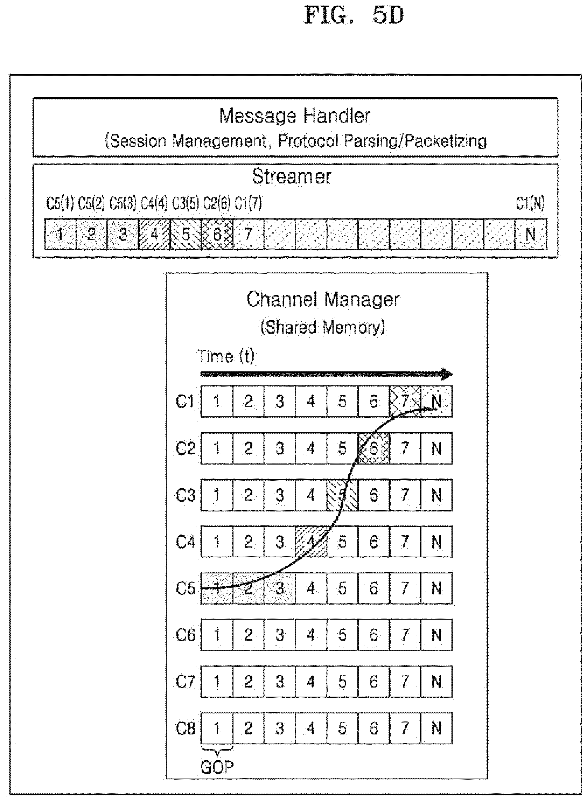

As shown in FIG. 5D, when a channel shift request is received from the user terminal, the channel manager 133-3 schedules images in an order of GOP1 to GOP3 among images captured in channel 5, i.e., by camera 5, GOP4 of channel 4, GOP5 of channel 3, GOP6 of channel 2, and GOP7 of channel 7 and transmits the scheduled images to the streamer 133-2. The streamer 133-2 gathers GOP images according to scheduling of the channel manager 133-3 and transmits the gathered GOP images to the user terminal.

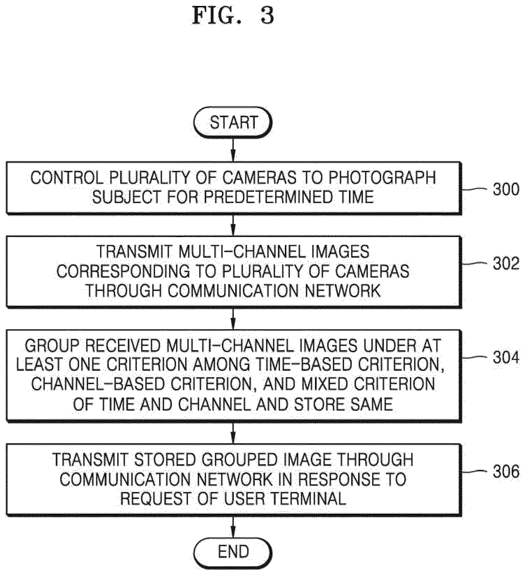

FIG. 3 is a flowchart of a control method for a transmission system for a multi-channel image, according to another embodiment.

Referring to FIG. 3, in operation 300, a control is performed to photograph a subject for a predetermined time through a plurality of cameras.

In operation 302, multi-channel images corresponding to the plurality of cameras are transmitted through a communication network.

In operation 304, the multi-channel images transmitted from a camera control unit are grouped under at least one criterion among a time-based criterion, a channel-based criterion, and a mixed criterion of time and channel and stored. A grouped image may be stored through time-based grouping, a grouped image may be stored through channel-based grouping, or a grouped image may be stored through time-based and channel-based mixed grouping.

In operation 306, a stored grouped image is transmitted through a communication network in response to a request from a user terminal. Herein, the communication network may be a wired or wireless communication network and may be the same as or different from the communication network in operation 302.

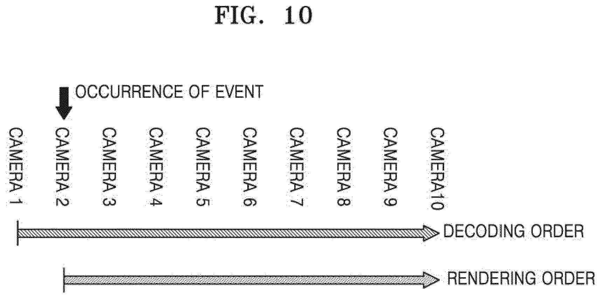

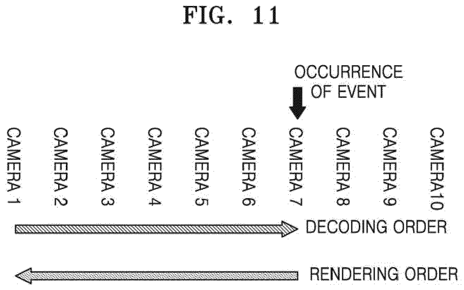

FIGS. 10 and 11 illustrate methods of decoding and rendering in response to occurrence of an event, according to another embodiment.

According to an embodiment, the image server 200 may decode and render a multi-channel image in response to occurrence of an event and transmit the rendered multi-channel image to the user terminal 150, or the image server 200 may transmit a multi-channel image or a grouped image to the user terminal 150, and the user terminal 150 may decode and render a compressed and transmitted image in response to occurrence of an event according to the user's request while playing back the transmitted multi-channel or grouped image. In this case, quick image channel switching for real-time image playback is necessary, and thus, decoding and rendering are performed as follows.

Referring to FIG. 10, when a multi-channel image of cameras 1 to 10 is present, it is assumed that an event occurs in an image corresponding to camera 2 to the right. For example, the user may want to play back from an image captured by camera 2 to an image captured by camera 10 on the user terminal 150. In this case, with respect to a compressed multi-channel image, decoding is performed from camera 1 to camera 2, a decoded image is stored in a temporary memory or a buffer, and thereafter, rendering starts from camera 2.

Referring to FIG. 11, when a multi-channel image of cameras 1 to 10 is present, it is assumed that an event occurs in an image corresponding to camera 7 to the left. For example, the user may want to play back from an image captured by camera 7 to an image captured by camera 1 on the user terminal 150. In this case, with respect to a compressed multi-channel image, decoding is performed from camera 1 to camera 7, a decoded image is stored in a temporary memory or a buffer, and thereafter, rendering starts from camera 7 to camera 1.

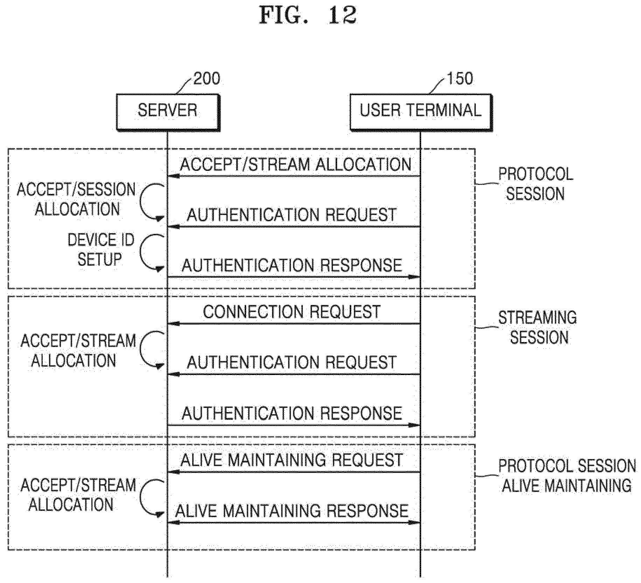

FIG. 12 is a diagram of signaling between the image server 200 and a user terminal 150, for implementing real-time streaming, according to another embodiment.

Referring to FIG. 12, in response to a connection request from the user terminal 150 to the image server 200, the image server 200 accepts the connection request and allocates a session. In response to an authentication request from the user terminal 150, when the image server 200 allocates a device identifier (ID) and responds to the authentication request, the user terminal 150 initiates an authentication or device ID protocol session.

When the user terminal 150 transmits a connection request for a streaming session, the image server 200 accepts the connection request and allocates a stream. When the user terminal 150 transmits an authentication request, the image server 200 responds to the authentication request. The user terminal 150 initiates a streaming session by using the authentication or device ID.

To maintain a protocol session in an alive state, the user terminal 150 transmits an alive maintaining request to the image server 200 once a predetermined time, e.g., one second. The image server 200 responds to this request and manages the session. Therefore, a connection state or an event state between the image server 200 and the user terminal 150 is maintained.

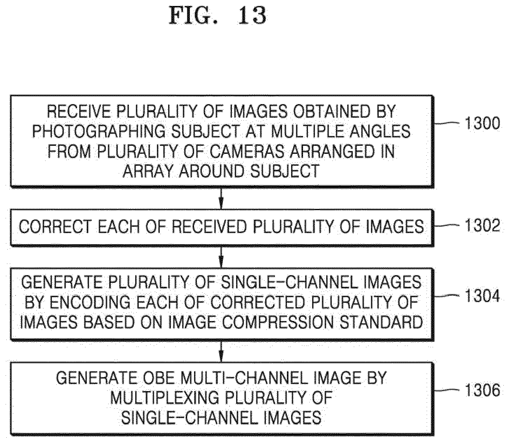

FIG. 13 is a flowchart of a multi-channel image generation method according to another embodiment. The multi-channel image generation method includes: (1300) receiving a plurality of images captured by photographing a subject at multiple angles from a plurality of cameras arranged in an array around the subject; (1302) correcting each of the received plurality of images; (1304) generating a plurality of single-channel images by encoding each of the corrected plurality of images based on an image compression standard; and (1306) generating a single multi-channel image by multiplexing the plurality of single-channel images.

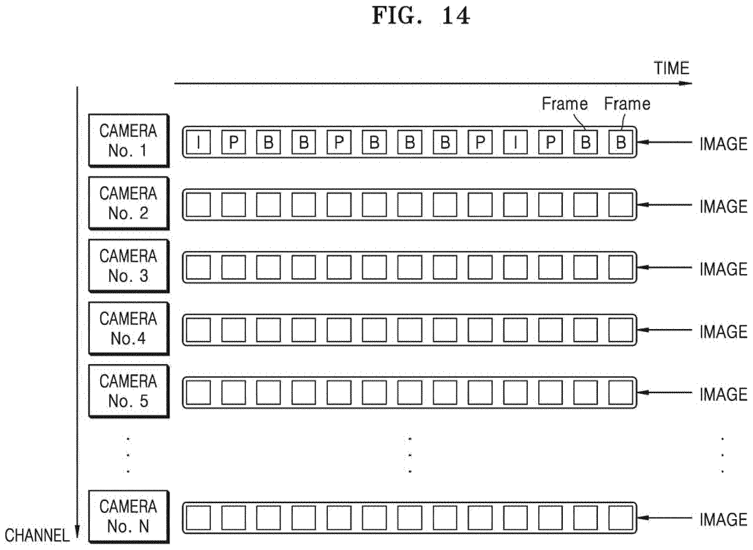

First, in operation 1300, a plurality of images captured by photographing a subject at multiple angles are received from a plurality of cameras arranged in an array around the subject. A method of arranging the plurality of cameras may include, for example, arranging the n cameras in a line on substantially the same plane with reference to an arbitrary camera. In this case, the n cameras may be sequentially arranged on a circumference separated by a predetermined distance from the subject, or distances between two cameras arranged at both sides of a camera arranged at the center and the subject may be same and distances between the remaining cameras and the subject may be different. FIG. 14 is a conceptual diagram of arranging respective images received from a plurality of cameras on a frame basis. The n cameras photograph the same subject at multiple angles, each camera acquires an image for a preset time in a specific channel (at a specific viewpoint), and a server receives the acquired n images. According to an embodiment, the subject is not particularly limited, but for example, when a batter's box in a baseball playground is set as the subject, n angle-based images of the target (batter's box?) are received to the server.

Next. In operation 1302, each of the received plurality of images is corrected. Geometric errors of an arrangement of N cameras cause visual shaking in a process of playing back a multi-channel image, and thus, to remove the errors, at least one of a size, a gradient, or a center position of each image is corrected. Each corrected image may be generated as a container, e.g., an MP4 or transport stream (TS) container.

Generally, an image stream consists of three types of frames. The three types of frames are intra (I) frames, predictive (P) frames, and bi-directionally predictive (B) frames. An I frame is encoded by simply performing discrete cosine transform (DCT) on the I frame without using motion vector estimation/correction, a P frame is encoded by performing motion estimation/correction with reference to the I frame or another P frame and then performing DCT on residual differential data, and for a B frame, motion correction is used like the P frame, but motion estimation/correction is performed based on two frames on a time axis. In an image stream, a sequence is defined by segments named GOP, and in a structure including I, B, B, P, B, B, P..., an I frame to a next I frame are called a GOP. Commonly, when displayed at an intended speed, a GOP consists of one set of images having a preset duration (e.g., 0.5 seconds). As shown in FIG. 14, each corrected image described above is a set of GOPs, each GOP consisting of a set of one I frame, one or more B frames, and one or more P frames Each corrected image includes one I frame and at least one P frame and B frame.

Next, in operation 1304, a plurality of (n) single-channel images are generated by encoding, based on an image compression standard, each of the plurality of images corrected using software. Herein, the image compression standard is preferably a Motion Joint Picture Expert Group (MJPEG) or H. 264 codec.

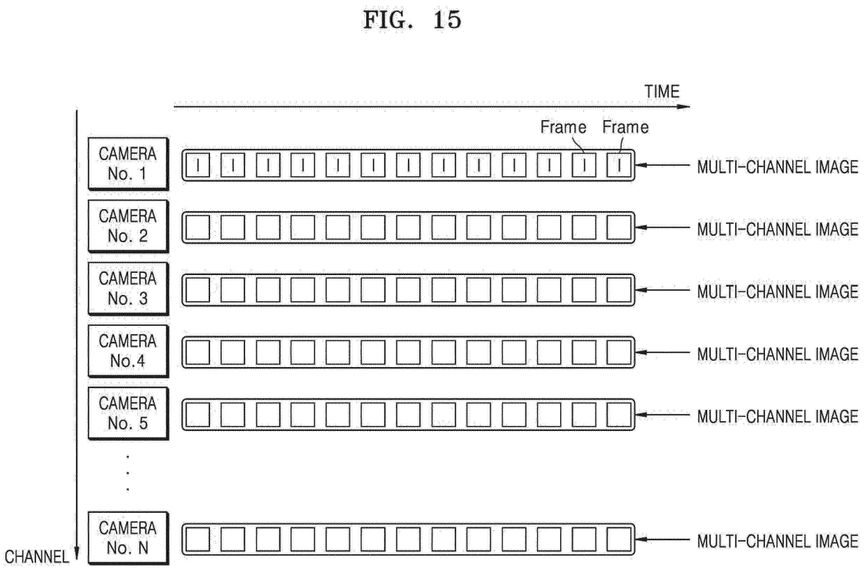

FIG. 15 is a conceptual diagram of a plurality of single-channel images generated by encoding a plurality of images. The single-channel image generated in operation 1304 as described above consists of a plurality of I frames.

In more detail, MJPEG is an image compression scheme of compressing an image in a frame unit, and an MJPEG image is a kind of video stream obtained by compressing each frame based on JPEG and inserting time information between JPEG frames. A corrected image before being encoded based on an MJPEG codec exists as, for example, an MP4 or TS container, and a corresponding image includes one I frame and at least one P frame and B frame as shown in FIG. 14. Meanwhile, a single-channel image encoded based on an image compression standard, i.e., an MJPEG codec is compressed on a frame basis, and thus, each frame has a complete image. In other words, the single-channel image described above is an image of which all frames are I frames and a GOP size is 1. By encoding each of the plurality of images based on an MJPEG codec in operation 1304, a task of substantially transforming the GOP size to 1 is performed.

When an image is encoded based on an MJPEG codec, a volume is greater due to frame-based compression, but unlike image codecs capable of decoding an image only with previous frame information due to GOP-based compression, quicker decoding is possible in a real-time access according to the frame-based compression. Even when each image is encoded based on an H.264 codec, the GOP size of a single-channel image is substantially transformed to 1 in the same manner as the MJPEG case described above.

When an operation of forwarding or reversing a playback time or tuning a channel (i.e., viewpoint) is performed in the middle of playback of an image, this is substantially switching to a specific target frame, and if a GOP of the image is not 1, i.e., the image includes an I frame and a B or P frame, when a user finds a designated specific frame and plays back a complete image, processing is not immediate, and thus, a time delay occurs. For example, when a target frame is a B or P frame, an I frame immediately before the target frame should be found and connected up to the target frame, and in this process, a time delay occurs. If each of a plurality of images is multiplexed without an encoding process with an MJPEG or H.264 codec, a GOP of the multiplexed image is not 1 either, and thus, when a time or channel switching event occurs, a time delay described above occurs, thereby breaking playback, and every time an event occurs, a problem of delaying image playback is continuously generated. In the present embodiment, by encoding each image of which a GOP size is not 1 based on an MJPEG or H.264 codec in operation 1304, a task of substantially transforming the GOP size to 1 is performed.

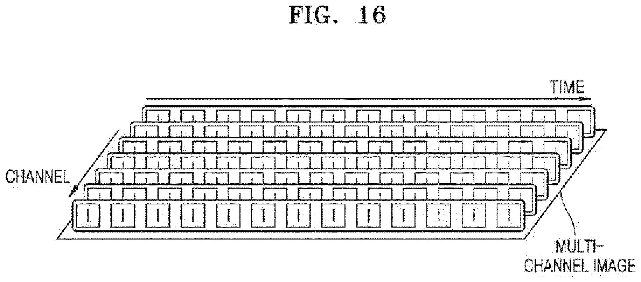

Next, in operation 1306, one multi-channel image is generated by multiplexing the plurality of single-channel images. FIG. 16 is a conceptual diagram of a multi-channel image generated by multiplexing a plurality of single-channel images. A multi-channel image re-generated as a single media file by multiplexing a plurality of single-channel images may be generated as a container, e.g., an MP4 or TS container, and in operation 1306, one multi-channel image consisting of a plurality of I frames by multiplexing the plurality of single-channel images is generated.

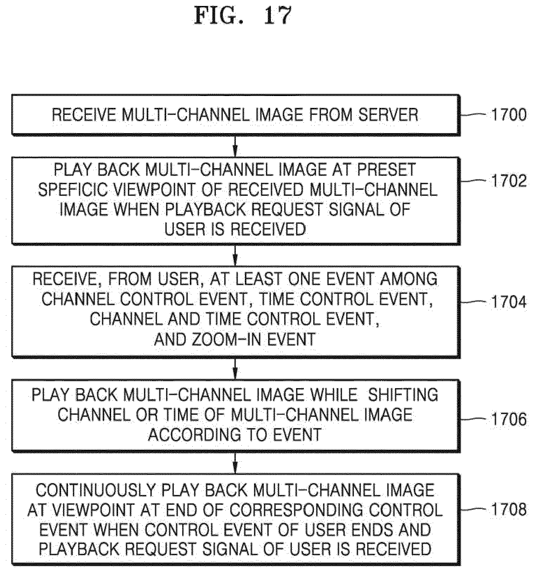

FIG. 17 is a flowchart of a multi-channel image playback method according to another embodiment. The multi-channel image playback method is to play back, on a user terminal, the multi-channel image generated with reference to FIG. 13. Herein, the user terminal may include a TV, a PC, a cellular phone, a smartphone, a laptop computer, a tablet PC, an e-book terminal, a digital broadcast terminal, a PDA, a PMP, a navigation machine, an MP3 player, a digital camera, or the like but is not limited thereto.

In detail, the multi-channel image playback method includes: (1700) receiving the multi-channel image described above from a server; (1702) playing back the multi-channel image at a preset specific viewpoint of the received multi-channel image when a playback request signal of a user is received; (1704) receiving, from the user, at least one event among a channel control event, a time control event, a channel and time control event, and a zoom-in event; 1706 playing back the multi-channel image while shifting a channel or time of the multi-channel image or zooming in a screen according to the event; and (1708) continuously playing back the multi-channel image at a viewpoint at the end of a corresponding control event when the control event of the user ends and a playback request signal of the user is received.

First, in operation 1700, a multi-channel image is received from the server. The multi-channel image is obtained by merging images obtained by photographing a subject at various angles for a predetermined time and has time information and channel information (viewpoint information).

Next, in operation 1702, when a playback request signal of the user is received, the multi-channel image is played back on the user terminal at a preset specific viewpoint of the received multi-channel image. The user terminal may play back the multi-channel image at a viewpoint of, for example, camera No. 4, and a channel may be preset by the user in a playback program or manually selected before the playback.

Next, in operation 1704, at least one of a channel control event, a time control event, a channel and time control event, a zoom-in event, an object tracking playback event, fine speed tuning including shift playback frame by frame, a section repeat function, real-time image recording, or a time machine function is received from the user. Herein, in addition to the events described above, various function events of video playback may be further included. The user terminal described above may include a touch screen capable of performing both a display function and an input function and having various touch types of user interfaces. The control events described above may be generated by a touch operation of the user on a display unit of the user terminal, wherein the channel control event may be generated by a continuous touch operation in a first direction on the display unit, the time control event may be generated by a continuous touch operation in a second direction on the display unit, and the channel and time control event may be generated by a continuous touch operation in a third direction on the display unit. For example, by using a finger of the user or a separate touch input means, drag in a left and right direction on a liquid crystal screen that is the display unit is set to shift time, drag in an up and down direction thereon is set to shift channel, and drag in a diagonal direction thereon is set to shift both time and channel. In addition, the zoom-in event may be controlled by touching two or more points in a region to be magnified on the screen of the display unit or touching a zoom-in icon on the display unit. When a touch operation is applied, a method of recognizing an initial recognition location, a final recognition location, and a drag input therebetween employs a known touch interface input recognition technique.

Next, in operation 1706, the multi-channel image is played back while shifting a channel or time of the multi-channel image according to the event. In detail, when a continuous touch operation in the first direction is applied from the user (i.e., when a channel control event is recognized) while playing back a multi-channel image in a specific channel, frames are played back by switching only a channel with fixed time to t₁. For example, when it is assumed that a multi-channel image is played back at a viewpoint of camera No. 4 and the first direction is the up and down direction, if an upward drag input from the user is recognized, the multi-channel image is played back while switching a channel to a direction of cameras Nos. 5, 6, and 7 with fixed time to t₁ when the control event is input. On the contrary, when a downward drag input from the user is recognized, the multi-channel image is played back while switching a channel to a direction of cameras Nos. 3, 2, and 1 with fixed time to t1 when the control event is input. In addition, when an operation direction is changed from the upward drag input to the downward drag input, only a channel is reversely switched at corresponding time t₁. In addition, when a continuous touch operation in the second direction is applied from the user (i.e., when a time control event is recognized) while playing back a multi-channel image at a specific viewpoint, frames are played back by switching only a time with a fixed viewpoint to a specific channel. For example, when it is assumed that a multi-channel image is played back at a viewpoint of camera No. 4 and the second direction is the left and right direction, if a left drag input from the user is recognized, the multi-channel image is played back while switching a time backward with a fixed channel.

Next, in operation 1708, when the control event of the user ends, if a playback request signal of the user is received, the multi-channel image is continuously played back at a viewpoint at the end of the control event. A control event end signal may be a signal indicating that continuous touch inputs from the user are not recognized by a terminal any more, and for example, a case where no user input is received for a predetermined time may be recognized as an end signal. According to the multi-channel image playback method, a multi-channel image may be viewed while manually switching a playback viewpoint or time in response to an operation of a user, thereby increasing user convenience.

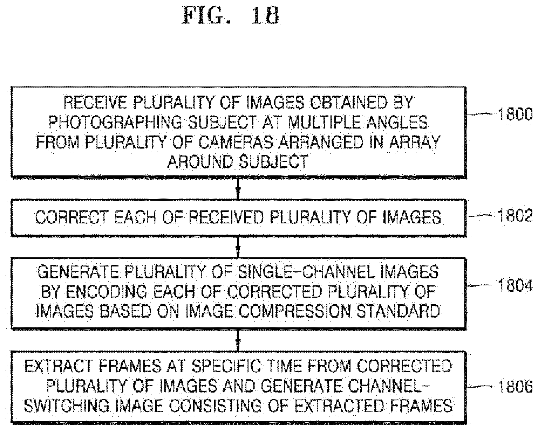

FIG. 18 is a flowchart of a multi-channel image generation method according to another embodiment. The multi-channel image generation method includes: (1800) receiving a plurality of images captured by photographing a subject at multiple angles from a plurality of cameras arranged in an array around the subject; (1802) correcting each of the received plurality of images; (1804) generating a plurality of single-channel images by encoding each of the corrected plurality of images based on an image compression standard; and (1806) extracting frames at a specific time from the corrected plurality of images and generating a channel-switching image consisting of the extracted frames.

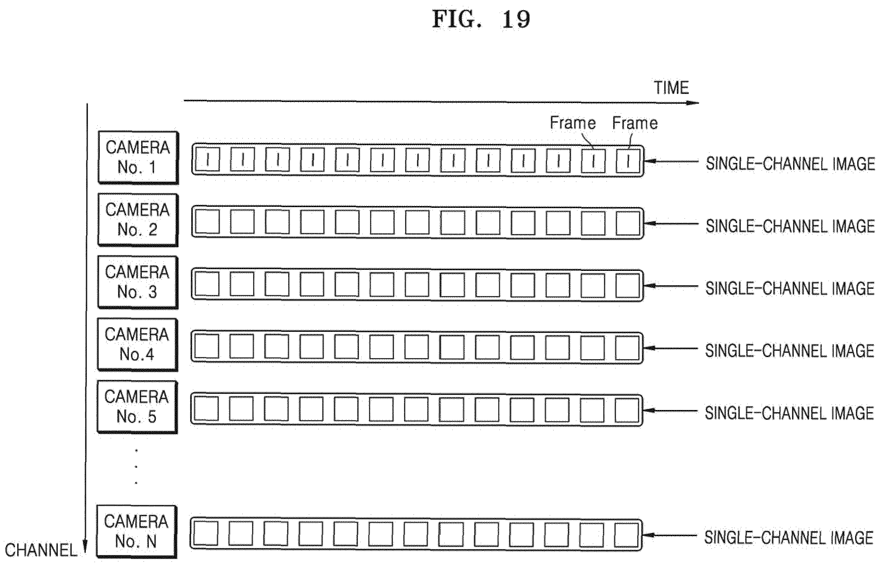

Operations 1800 to 1804 are substantially the same as those of the multi-channel image generation method shown in FIG. 13, and thus, a detailed description thereof is omitted herein. However, in operation 1804, each of the plurality of images is encoded based on an image compression standard to generate the plurality of single-channel images, but the single-channel images may be produced such that the GOP size thereof is 1 in accordance with circumstances. That is, a task of substantially transforming the GOP size of the single-channel images to 1 by encoding, based on an image compression standard, each of images of which the GOP size is not 1 is performed. In this case, the image compression standard is preferably MJPEG or H. 264. An image before encoding exists, for example, an MP4 or TS container, and a corresponding image includes one I frame and at least one P frame or B frame. Meanwhile, a single-channel image encoded based on an MJPEG or H.264 codec is compressed on a frame basis, and thus, each frame has a complete image. In other words, the single-channel image may be generated as an image of which all frames in the image are I frames and a GOP size is 1 as shown in FIG. 19.

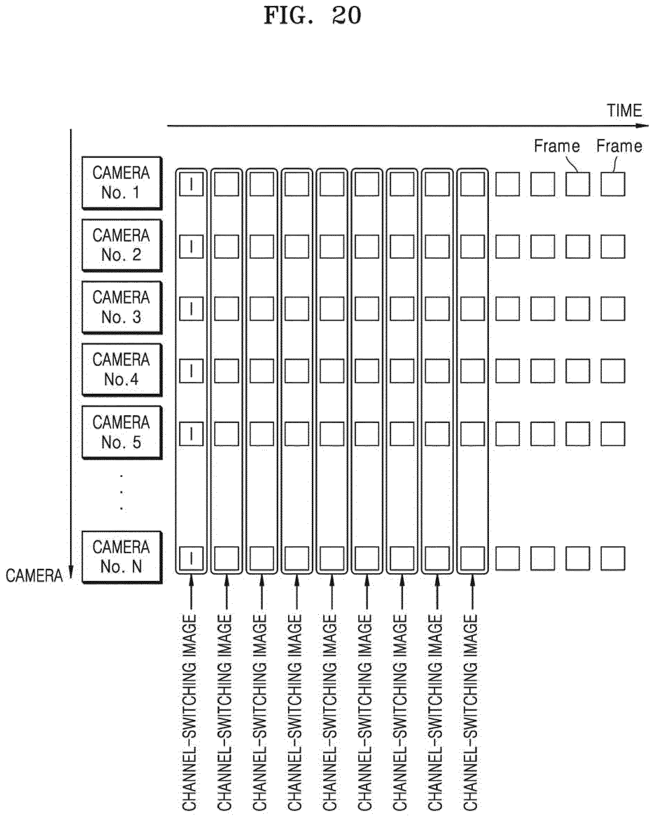

Next, in operation 1806, frames at a specific time are extracted from the corrected plurality of images by using software, and a channel-switching image consisting of the extracted frames is generated. FIG. 20 is a conceptual diagram of channel-switching images. In more detail, a plurality of images with shifted channels and a same time are acquired by extracting and image-processing frames at each time.

By performing this operation, a server has a plurality of single-channel images captured by respective cameras with fixed viewpoints and time (t)-based channel-switching images with a fixed specific time and shifted channels.

In this case, the channel-switching images may be produced such that a GOP value is 1. To this end, for example, all frames of images acquired from respective cameras are transformed to I frame images, and channel-switching images may be generated with I frames acquired at respective times t Alternatively, a plurality of channel-switching images may be generated by generating channel-switching images and then encoding the channel-switching images based on an image compression standard. That is, a task of substantially transforming the GOP size of the channel-switching images to 1 by encoding, based on an image compression standard, channel-switching images of which the GOP size is not 1 is performed. In this case, the image compression standard is preferably MJPEG or H. 264.

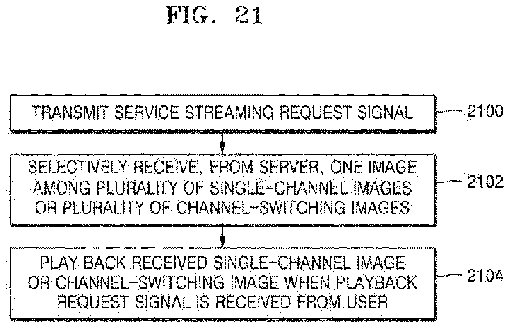

FIG. 21 is a flowchart of a multi-channel image playback method according to another embodiment. The multi-channel image playback method is to play back, on a user terminal, the multi-channel image generated by the method described above.

In detail, the multi-channel image playback method includes: (2100) transmitting a streaming request signal to a server; (2102) selectively receiving one image among a plurality of single-channel images or a plurality of channel-switching images; and (2104) playing back the received single-channel image or channel-switching image when a playback request signal is received from a user.

First, in operation 2100, a streaming request signal is transmitted to the server, and in operation 2102, one image among a plurality of single-channel images or a plurality of channel-switching images is selectively received from the server. Whether to transmit a single-channel image or a channel-switching image to the user terminal may be pre-designated to the server. Alternatively, in the transmitting of the streaming request signal to the server, the user may transmit the streaming request signal by selecting a single-channel image or a channel-switching image, and accordingly, a designated image may be received. Hereinafter, a case of receiving a single-channel image and a case of receiving a channel-switching image are separately described.

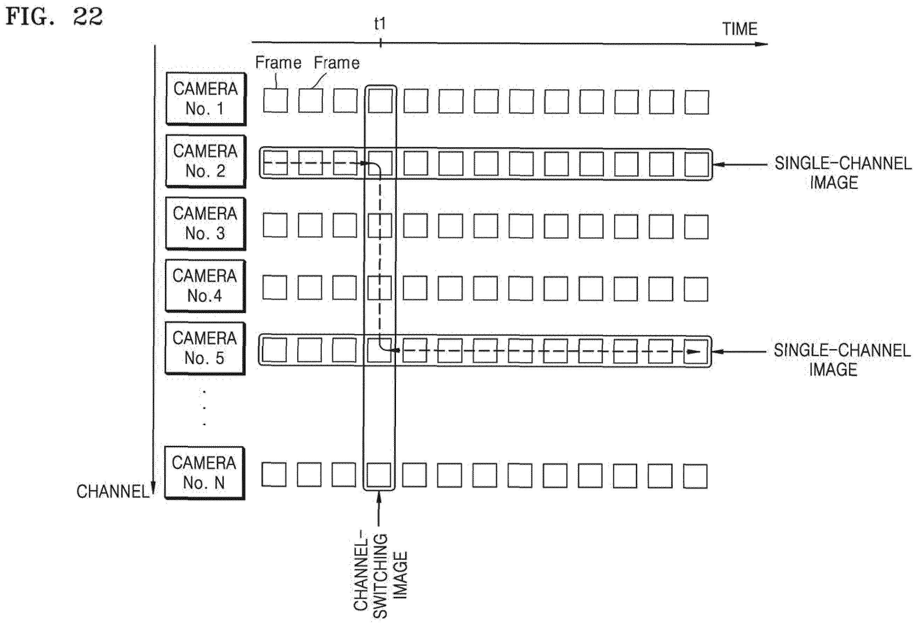

First, in the case where a single-channel image is received from the server, when a playback request signal is received from the user, the received single-channel image is played back. In this case, the streaming request signal may include channel information about an initial playback start viewpoint and further include information about an initial playback start time. The user terminal receives, from the server, a single-channel image corresponding to corresponding channel information among a plurality of single-channel images and plays back the received single-channel image. For example, FIG. 22 illustrates an image playback scenario when camera no. 2 is included as channel information in a streaming request signal.

Next, when a channel control event is received from the user, channel control event occurrence information is transmitted to the server. Next, a channel-switching image corresponding to a reception time of the channel control event among the plurality of channel-switching images is received from the server. Next, when a playback request signal is received from the user, the received channel-switching image is played back.

In this case, the channel control event occurrence information may include information about an event occurrence time. Referring back to FIG. 22, when a channel control event of the user is recognized at time t₁ while playing back a single-channel image at a viewpoint of camera No. 2, information including information about event occurrence time t₁ is transmitted to the server, and the server transmits, to the user terminal, a channel-switching image corresponding to t₁ among a plurality of channel-switching images. The user terminal plays back the channel-switching image received from the server.

The channel control event may be generated by a touch operation of the user on the display unit of the user terminal, and by a continuous touch operation in the first direction on the display unit of the user terminal. For example, when drag in the up and down direction on a liquid crystal screen that is the display unit is performed by using a finger of the user or a separate touch input means, a channel (viewpoint) may be shifted. For example, when assuming that the first direction is the up and down direction, if a continuous downward drag input operation is applied from the user at time t₁, the user terminal receives, from the server, the channel-switching image corresponding to t₁ among the plurality of channel-switching images in the server. Thereafter, when a downward drag input operation is continuously applied from the user, the received channel-switching image is played back while switching only a channel in a direction of cameras Nos. 3, 4, and 5 with a fixed time to t₁ (see FIG. 22). On the contrary, when an upward drag input from the user is recognized, the received channel-switching image is played back while switching a channel in a direction of camera No. 1.

Next, when a channel control end event is received from the user, channel control end event occurrence information is transmitted to the server. Next, a single-channel image corresponding to a channel when a channel control event end signal is received among the plurality of single-channel images is received from the server, a playback request signal is received from the user, and the received single-channel image is played back.

In this case, the channel control end event occurrence information may include information about a channel (viewpoint) when the event ends. Referring back to FIG. 22, when a channel control end event of the user is recognized as soon as a channel is switched to camera No. 5 while playing back the channel-switching image at time t₁, information about a fifth channel that is a channel when the event ends is transmitted to the server. The channel control end event may recognize, as an end signal, a signal indicating that continuous touch inputs from the user are not recognized by a terminal any more. In this case, the server selects a single-channel image corresponding to the fifth channel among the plurality of single-channel images and transmits the selected single-channel image to the user terminal. The user terminal plays back the single-channel image received from the server after time t₁ when a playback request signal is received from the user.

Meanwhile, receiving a time control event from the user; and performing playback while shifting a time of a single-channel image received in response to the time control event may be further included. This playback may be performed after playing back the single-channel image received to the user terminal or after playing back the received single-channel image. For example, when a continuous touch operation in the second direction from the user is applied (i.e., when a time control event is recognized) while playing back a specific multi-channel image, frames are played back while switching only a time with a fixed corresponding channel. For example, when it is assumed that a multi-channel image is played back at a time point of camera No. 5 and the second direction is the left and right direction, if a left drag input from the user is recognized, playback is performed while switching a time backward with a fixed viewpoint.

According to the multi-channel image playback method, a multi-channel image may be viewed while manually switching a playback viewpoint or playback time in response to an operation of the user.

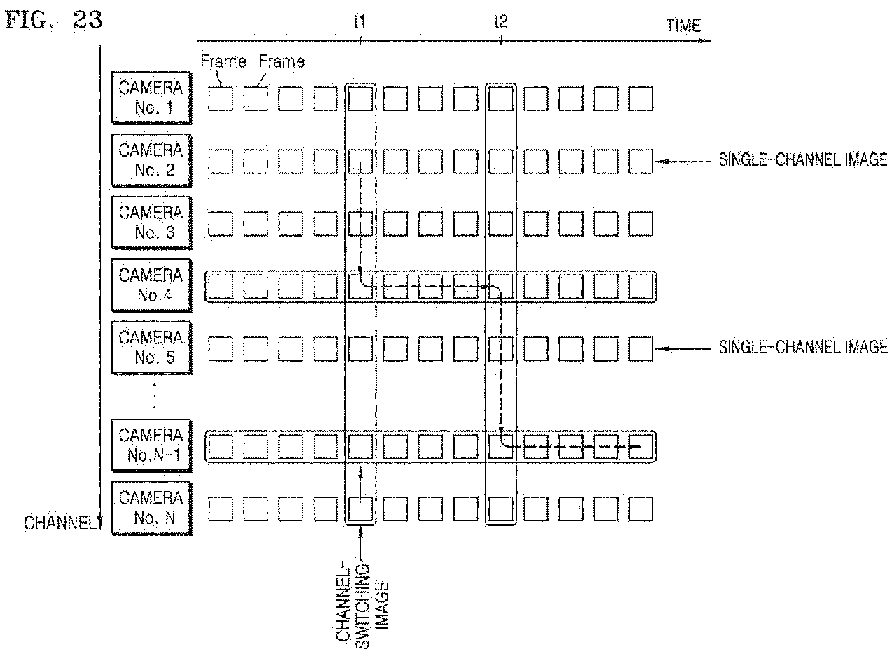

Meanwhile, when a channel-switching image is received from the server, if a playback request signal is received from the user, the received channel-switching image is played back. In this case, the streaming request signal may include time information about an initial playback start time and further include information about an initial playback start viewpoint. The user terminal may play back a channel-switching image in a pre-designated channel from a pre-designated time. For example, FIG. 23 illustrates an image playback scenario when a streaming request signal includes an initial playback start time set to t₁ and an initial playback viewpoint set to camera No. 2.

Next, a single-channel image playback event is received from the user, and single-channel image playback event occurrence information is transmitted to the server. A single-channel image corresponding to a channel when the single-channel image playback event is received among the plurality of single-channel images is received from the server. Thereafter, a playback request signal is received from the user, and the received single-channel image is played back. In this case, the single-channel image playback event occurrence information may include information about a channel when the event occurs. For example, referring to FIG. 23, when a single-channel image playback event of the user is recognized as soon as a channel is switched to camera No. 4 while playing back an image through channel switching up to camera No. 4 after starting from camera No. 2 with a fixed time to t₁, single-channel image playback event occurrence information, i.e., information about a channel (camera No. 4) is transmitted to the server. Herein, a touch input of the user may be recognized as the single-channel image playback event. In this case, the server selects a single-channel image corresponding to the fourth channel among the plurality of single-channel images and transmits the selected single-channel image to the user terminal. When a playback request signal is received from the user, the user terminal plays back the single-channel image of the fourth channel, which is received from the server, after time t₁.

Thereafter, receiving a time control event from the user; and performing playback while shifting a time of a single-channel image received in response to the time control event may be further included. This playback may be performed after playing back the single-channel image received to the user terminal or after playing back the received single-channel image. For example, referring to FIG. 23, when a continuous touch operation in the second direction from the user is applied (i.e., when a time control event is recognized) while playing back a multi-channel image of the fourth channel, frames are played back while switching only a time with a viewpoint fixed to a corresponding channel. For example, when it is assumed that the second direction is the left and right direction, if a left drag input from the user is recognized, playback may be performed while switching a time between t₁ and t₂ with a fixed viewpoint.

Meanwhile, when a channel control event is received from the user, channel control event occurrence information is transmitted to the server. Thereafter, a channel-switching image corresponding to a reception time of the channel control event among the plurality of channel-switching images is received from the server. Next, when a playback request signal is received from the user, the received channel-switching image is played back.

In this case, the channel control event occurrence information may include information about an event occurrence time. Referring back to FIG. 23, when a channel control event of the user is recognized at time t₂ while playing back a single-channel image at a viewpoint of camera No. 4, information including information about event occurrence time t₂ is transmitted to the server, and the server transmits, to the user terminal, a channel-switching image corresponding to t₂ among a plurality of channel-switching images. The user terminal plays back the channel-switching image received from the server. For example, when assuming that the first direction is the up and down direction, if a continuous downward drag input operation is applied from the user at time t₂, the user terminal receives, from the server, the channel-switching image corresponding to t₂ among the plurality of channel-switching images in the server. Thereafter, when a downward drag input operation is continuously applied from the user, the received channel-switching image is played back while switching only a channel in a direction of cameras Nos. 5, 6, and 7 with a fixed time to t₂. On the contrary, when an upward drag input from the user is recognized, the received channel-switching image is played back while switching a channel in a direction of camera No. 3.

Next, when a channel control end event is received from the user, channel control end event occurrence information is transmitted to the server. Next, a single-channel image corresponding to a channel when a channel control event end signal is received among the plurality of single-channel images is received from the server, and when a playback request signal is received from the user, the received single-channel image is played back. In this case, the channel control end event occurrence information may include information about a channel (viewpoint) when the event ends. Referring back to FIG. 23, when a channel control end event of the user is recognized as soon as a channel is switched to camera No. N-1 while playing back the channel-switching image at time t₂, information about the channel when the event ends is transmitted to the server. The channel control end event may recognize, as an end signal, a signal indicating that continuous touch inputs from the user are not recognized by a terminal any more. In this case, the server selects a single-channel image corresponding to an (N-1)th channel among the plurality of single-channel images and transmits the selected single-channel image to the user terminal. When a playback request signal is received from the user, the user terminal plays back the single-channel image of the (N-1)th channel, which is received from the server, after time b₂.

Meanwhile, receiving a time control event from the user; and performing playback while shifting a time of a single-channel image received in response to the time control event may be further included. For example, when a continuous touch operation in the second direction is applied from the user (i.e., when a time control event is recognized) while playing back a multi-channel image of the (N-1)th channel, frames are played back by switching only a time with a fixed viewpoint to the (N-1)th channel.

Meanwhile, channel switching control may be performed even before or after the playback of the received channel-switching image. That is, an image may be viewed while switching a channel even before receiving and playing back a channel-switching image or while playing back the channel-switching image. In detail, receiving a channel control event from the user; and performing playback while shifting a viewpoint of a channel-switching image received in response to the channel control event may be included. For example, when a downward drag input operation is applied from the user, the channel-switching image is played back while switching only a channel with a fixed time. On the contrary, when an upward drag input from the user is recognized, the received channel-switching image is played back while switching a channel in the opposite direction.

According to the multi-channel image playback method, a multi-channel image may be viewed while manually switching a playback viewpoint or playback time in response to an operation of the user.

One embodiment may be implemented in a form of a recording medium including computer-executable instructions such as a program module executed by a computer system. A computer-readable medium may be an arbitrary available medium which may be accessed by a computer system and includes all types of volatile and nonvolatile media and separated and non-separated media. In addition, the computer-readable medium may include all types of computer storage media and communication media. The computer storage media include all types of volatile and nonvolatile and separated and non-separated media implemented by an arbitrary method or technique for storing information such as computer-readable instructions, a data structure, a program module, or other data. The communication media typically include computer-readable instructions, a data structure, a program module, other data of a modulated signal such as a carrier, other transmission mechanism, and arbitrary information delivery media.

The above description is only illustrative, and it will be understood by those of ordinary skill in the art that various changes in form and details may be made therein without changing the technical spirit and mandatory features of the present invention. Therefore, the embodiments described above should be understood in the illustrative sense only and not for the purpose of limitation in all aspects. For example, each component described as a single type may be carried out by being distributed, and likewise, components described as a distributed type may also be carried out by being coupled.

The scope of the present invention is defined not by the detailed description but by the appended claims, and it should be understood that the meaning and scope of the claims and all changed or modified forms derived from the equivalent concept of the claims are included in the scope of the present invention.

## Claims

1. A transmission system for a multi-channel image, the transmission system comprising:
a camera control unit configured to control a plurality of cameras to photograph a subject for a predetermined time and transmit multi-channel images corresponding to the plurality of cameras through a communication network; and
an image server configured to group the multi-channel images transmitted from the camera control unit under at least one criterion among a time-based criterion, a channel-based criterion, and a mixed criterion of time and channel, store the same, and transmit the grouped image through the communication network in response to a request of the a user terminal.

2. The transmission system of claim 1, wherein
the mixed criterion of time and channel is
multiplexing images of first to M^{th} (M is a natural number of 2 or more) channels corresponding to first to N^{th} (N is a natural number of 2 or more) times or
multiplexing images of M^{th} to first channels corresponding to first to N^{th} times.

3. The transmission system of claim 1, wherein
the mixed criterion of time and channel is
multiplexing images of first to M^{th} (M is a natural number of 2 or more) channels corresponding to N^{th} (N is a natural number of 2 or more) to first times or
multiplexing images of M^{th} to first channels corresponding to N^{th} to first times.

4. The transmission system of claim 1, wherein
images corresponding to a channel for ±y (y is a natural number) times with reference to an event corresponding to any one time in the predetermined time are grouped.

5. The transmission system of claim 1, wherein
the camera control unit is further configured to
transmit a photographing synchronization signal and a photographing driving control signal such that the plurality of cameras photograph the subject at the same time, compress multi-channel images which correspond to the plurality of cameras and are transmitted from the plurality of cameras, and determine a data transmission scheme available according to the communication network.

6. The transmission system of claim 1, wherein
the image server is further configured to:
sequentially decode the grouped image from a first channel when an event corresponding to a request of the user terminal occurs in a predetermined channel among first to M^{th} (M is a natural number of 2 or more) channels; and
render the decoded images in an occurrence direction of the event from the channel at which the event has occurred.

7. The transmission system of claim 1, wherein
the grouped image includes
one multi-channel image obtained by multiplexing the plurality of single-channel images, and a channel-switching image consisting of extracted frames obtained by extracting frames at a specific time from the plurality of single-channel images, and
the plurality of single-channel images and the channel-switching image have GOP values of 1.

8. A control method for a transmission system for a multi-channel image, the control method comprising:
controlling a plurality of cameras to photograph a subject for a predetermined time;
transmitting multi-channel images corresponding to the plurality of cameras through a communication network;
grouping the multi-channel images transmitted from the camera control unit under at least one criterion among a time-based criterion, a channel-based criterion, and a mixed criterion of time and channel, and storing the same; and
transmitting the stored grouped image through the communication network in response to a request of the a user terminal.

9. The control method of claim 8, wherein
the mixed criterion of time and channel is
multiplexing images of first to M^{th} (M is a natural number of 2 or more) channels corresponding to first to N^{th} (N is a natural number of 2 or more) times, multiplex images of M^{th} to first channels corresponding to first to N^{th} times, multiplex images of first to M^{th} channels corresponding to N^{th} to first times, or multiplex images of M^{th} to first channels corresponding to N^{th} to first times.

10. The control method of claim 8, wherein
images corresponding to a channel for ±y (y is a natural number) times with reference to an event corresponding to any one time in the predetermined time are grouped.

11. The control method of claim 8, further comprising:
sequentially decoding the grouped image from a first channel when an event corresponding to a request of the user terminal occurs in a predetermined channel among first to M^{th} (M is a natural number of 2 or more) channels;
rendering the decoded images in an occurrence direction of the event from the channel at which the event has occurred; and
transmitting the rendered images to the user terminal.

12. A playback apparatus for playback of a multi-channel image, the playback apparatus comprising:
a memory storing the multi-channel image; and
a processor configured to receive an event request from a predetermined channel among first to M^{th} (M is a natural number of 2 or more) channels corresponding to the multi-channel image, sequentially decode the multi-channel image from the first channel, render the decoded images in an occurrence direction of an event from the channel at which the event has occurred, and play back the rendered images.

13. A multi-channel image playback method, performed by a user terminal, for playback of a multi-channel image, the multi-channel image playback method comprising:
receiving the multi-channel image from a server;
playing back the multi-channel image at a preset specific viewpoint in the received multi-channel image;
receiving, from a user, at least one event among a channel control event, a time control event, a channel and time control event, a zoom-in event, an object tracking event, fine speed tuning, and section repeat; and
playing back the multi-channel image while shifting a channel or time of the multi-channel image according to the event.

14. The multi-channel image playback method of claim 13, further comprising
continuously playing back the multi-channel image at a viewpoint at the end of a corresponding control event, when the control event of the user ends and a playback request signal of the user is received.

15. The multi-channel image playback method of claim 14, wherein
the control event is generated by a touch operation of the user on a display unit of the user terminal on which the multi-channel image is played back,
the channel control event is generated by a continuous touch operation in a first direction on the display unit, the time control event is generated by a continuous touch operation in a second direction on the display unit, and the channel and time control event is generated by a continuous touch operation in a third direction on the display unit.

16. A multi-channel image playback method, performed by a user terminal, for playback of a multi-channel image, the multi-channel image playback method comprising:
transmitting a streaming request signal to a server;
selectively receiving, from the server, one image among a plurality of single-channel images or a plurality of channel-switching images; and
playing back the received single-channel image or channel-switching image when a playback request signal is received from the user terminal,
wherein an image predetermined by the server is received among the single-channel images or the channel-switching images, or an image selected by the user terminal in the transmitting of the streaming request signal to the server is received.
